(19) Europäisches Patentamt
European Patent Office
Office européen des brevets

(11) **EP 2 987 844 A1**

(12) **EUROPEAN PATENT APPLICATION**
published in accordance with Art. 153(4) EPC

(43) Date of publication:
**24.02.2016 Bulletin 2016/08**

(21) Application number: **14786026.6**

(22) Date of filing: **07.04.2014**

(51) Int Cl.:
***C09K 21/12*** *(2006.01)* ***C08K 5/521*** *(2006.01)*
***C08L 101/00*** *(2006.01)*

(86) International application number:
**PCT/JP2014/060068**

(87) International publication number:
**WO 2014/171358 (23.10.2014 Gazette 2014/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.04.2013 JP 2013084897**

(71) Applicant: **Daihachi Chemical Industry Co., Ltd.**
**Osaka 541-0046 (JP)**

(72) Inventors:
- **KAKUSHOU, Fujio**
  **Fukui-shi**
  **Fukui 910-3138 (JP)**
- **FUKUHARA, Hiroyuki**
  **Fukui-shi**
  **Fukui 910-3138 (JP)**
- **NAKANO, Ryosuke**
  **Fukui-shi**
  **Fukui 910-3138 (JP)**

(74) Representative: **Zanoli, Enrico et al**
**Zanoli & Giavarini S.p.A.**
**Via Melchiorre Gioia, 64**
**20125 Milano (IT)**

(54) **FLAME-RETARDANT AGENT COMPOSITION AND FLAME-RETARDANT RESIN COMPOSITION CONTAINING SAME, AND MOLDED ARTICLE**

(57) A flame-retardant agent composition containing an organophosphorous compound represented by the general formula (I):
wherein $R^1$ and $R^2$ each independently represent an alkyl group having 1 to 5 carbon atoms; $R^3$ and $R^4$ each independently represent a hydrogen atom or an alkyl group having 1 to 5 carbon atoms; Y represents a bond or a group $-CH_2-$, $-C(CH_3)_2-$, -S-, $-SO_2-$, -O-, -CO- or - N=N-; k represents 0 or 1; and m represents an integer of 0 to 4 and
having a property such that a content of a compound represented by the formula (II):
wherein $R^1$, $R^2$ and $R^3$ are as defined in the general formula (I)
is 1.8% by area or less when the organophosphorous compound is determined by gel permeation chromatography (GPC).

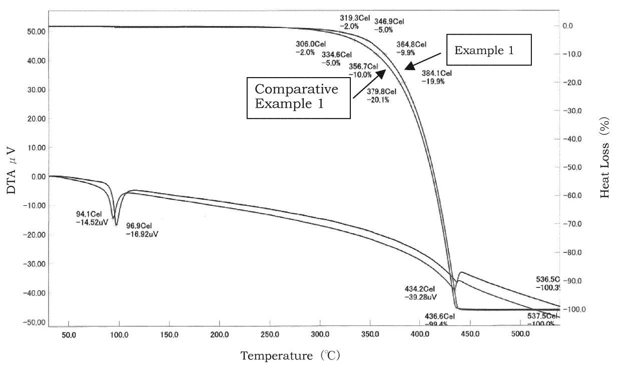

Fig. 1

EP 2 987 844 A1

**Description**

TECHNICAL FIELD

The present invention relates to a phosphorus flame-retardant agent composition for resins, a flame-retardant resin composition containing the same, and a molded article comprising the same.

BACKGROUND ART

In order to impart flame retardancy to a thermoplastic resin or a thermosetting resin, there has been adopted a method in which a flame retardant is added in the process of molding the resin into an article. Examples of the flame retardant include inorganic compounds, organophosphorous compounds, organohalogen compounds and halogen-containing organophosphorous compounds. Out of these compounds, organohalogen compounds and halogen-containing organophosphorous compounds exert an excellent flame-retardant effect. However, these halogen-containing compounds are pyrolyzed in the process of molding the resin to generate a hydrogen halide, which corrodes a metal mold, deteriorates the resin itself and causes coloration, degrading working conditions. Another problem is that they generate a toxic gas such as a hydrogen halide, which is harmful to human bodies, when in a fire or incineration.

A halogen-free flame retardant is, therefore, desired.

Examples of such a flame retardant include inorganic compounds such as magnesium hydroxide and aluminum hydroxide; and nitrogen compounds such as melamine cyanurate, melamine phosphate and melamine polyphosphate. However, the inorganic compounds and the nitrogen compounds have a significantly low flame-retardant effect and therefore need to be added in a large amount to obtain a sufficient effect, leading to degradation of physical properties intrinsic to the resin.

As examples of the halogen-free flame retardant that provides a relatively good flame-retardant effect, there may be mentioned organophosphorous compounds, among which organophosphates are generally used. As a representative organophosphate, triphenyl phosphate (TPP) is well known. However, TPP is less heat-resistant and more volatile. While recently-developed high-performance plastics such as engineering plastics and super engineering plastics require a temperature as high as approximately 300°C for molding, TPP is thus not proof against such a high temperature.

For a flame retardant having thermostability and low volatility, therefore, studies have been made on flame retardants in a powdered state that are high-purity, well-moldable, and advantageous in terms of handling, packaging and transportation, focusing on compounds such as aromatic diphosphates represented by the general formula (I) of the present invention (see Japanese Unexamined Patent Publication No. Hei 5(1993)-1079 (Patent Document 1) and Japanese Unexamined Patent Publication No. Hei 9(1997)-87290 (Patent Document 2)).

In the preparation method disclosed in Patent Document 1, a high-purity aromatic diphosphate is obtained by recrystallization or crystallization using a solvent in a purification process after a reaction. Such a method requires the steps of solid-liquid separation, drying and recycling of the solvent and has a low yield due to loss from dissolution to the solvent; therefore, this method is not necessarily advantageous in terms of preparation steps and costs, assuming in particular a large industrial scale.

Patent Document 2, therefore, has proposed a method in which an obtained aromatic diphosphate is solidified and powdered without being subjected to a special purification process.

According to the method of Patent Document 2, however, a phosphorous compound having a hydroxyphenyl group is present as a by-product in the aromatic diphosphate due to the absence of a special purification process.

When the aromatic diphosphate including the by-product is added as a flame retardant to a thermoplastic resin such as polycarbonate, it reacts with an end of a molecule of the pyrolyzed resin, or it gradually causes an adverse effect during a long period of use of a molded article of resin, reducing the molecular weight of the resin, with the result that physical properties of the molded article of resin such as durability, water resistance, hydrolysis resistance and heat resistance will be reduced.

In addition, the by-product undergoes transesterification with the aromatic diphosphate being a main component under a high-temperature condition such as in the molding process to cause a further increase of the by-product, reducing the purity of the main component.

To solve the above-described problems, a flame-retardant agent composition having a less content of a phosphorous compound having a hydroxyphenyl group as its by-product and a preparation method of the flame-retardant agent composition were proposed (see PCT International Publication No. WO 2010/082426 (Patent Document 3) and PCT International Publication No. WO 2012/005109 (Patent Document 4)).

Through this preparation method, a halogen concentration, etc. in a reaction mixture are measured in advance after Step 1; and an aromatic dihydroxy compound having a stoichiometric amount, which is necessary in Step 2, calculated from the halogen concentration, etc. is reacted in Step 2 with a diaryl phosphorohalidate produced in Step 1, so as to suppress the production of the phosphorous compound having the hydroxyphenyl group as the by-product.

CITATION LIST

PATENT LITERATURES

Patent Document 1: Japanese Unexamined Patent Publication No. Hei 5(1993)-1079
Patent Document 2: Japanese Unexamined Patent Publication No. Hei 9(1997)-87290
Patent Document 3: PCT International Publication No. WO 2010/082426
Patent Document 4: PCT International Publication No. WO 2012/005109

SUMMARY OF INVENTION

TECHNICAL PROBLEMS

The flame-retardant agent compositions of Patent Documents 3 and 4 are likely to generate volatile matters and gases from a resin composition while being kneaded with a resin at a high temperature, leading to mold fouling (a molded deposit) at the time of molding an article. These flame-retardant agent compositions are also likely to cause adverse effects on mechanical properties of the resin composition such as increasing plasticity of the resin composition and reducing its deflection temperature under load.

The present invention, therefore, has an object of providing a flame-retardant agent composition that may minimize generation of volatile matters and gases at the time of kneading a resin composition and molding an article and may minimize mold fouling, etc.; a flame-retardant resin composition containing the same; and a molded article comprising the same.

SOLUTION TO PROBLEMS

The inventors of the present invention made intensive studies to solve the above-described problems and found that the problems such as the mold fouling, etc. during the kneading of the resin composition and the molding of the article at a high temperature cause an aromatic monophosphate - which is a phosphorous compound monomer - low in molecular weight and high in volatility. Since the traditional preparation methods were unlikely to suppress the generation of this aromatic monophosphate as the by-product, the inventors of the present invention made the flame-retardant agent composition have a less content of this aromatic monophosphate by reacting raw material compounds under specific conditions and found that the flame-retardant agent composition may be prepared only through an after-treatment step for removing used solvents and catalysts after the reaction production without carrying out a special purification process such as recrystallization or crystallization and eventually achieved the present invention by solving the above-described problems.

The present invention, therefore, provides a flame-retardant agent composition containing an organophosphorous compound represented by the general formula (I):

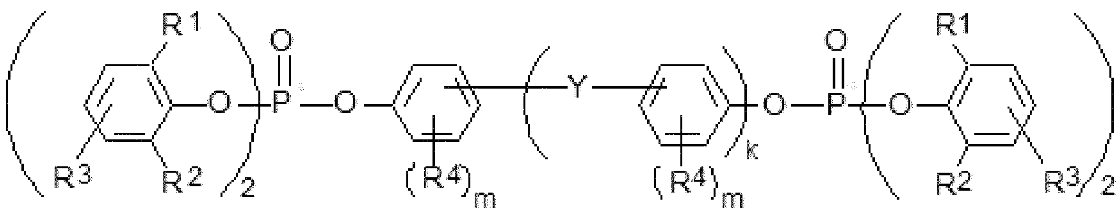 (I)

wherein $R^1$ and $R^2$ each independently represent an alkyl group having 1 to 5 carbon atoms; $R^3$ and $R^4$ each independently represent a hydrogen atom or an alkyl group having 1 to 5 carbon atoms; Y represents a bond or a group $-CH_2-$, $-C(CH_3)_2-$, -S-, $-SO_2-$, -O-, -CO- or - N=N-; k represents 0 or 1; and m represents an integer of 0 to 4 and having a property such that a content of a compound represented by the formula (II):

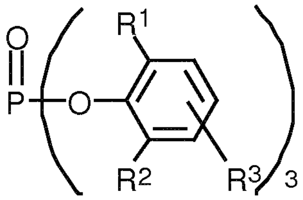

( II )

wherein $R^1$, $R^2$ and $R^3$ are as defined in the general formula (I) is 1.8% by area or less when the organophosphorous compound is determined by gel permeation chromatography (GPC).

The present invention also provides a flame-retardant resin composition containing one or more kinds of resins selected from polyphenylene ether resins, polycarbonate resins, ABS resins, impact-resistant styrene resins, rubber-modified styrene resins, polyamide resins, polyester resins and epoxy resins; and the above-described flame-retardant agent composition. Furthermore, the present invention provides a molded article comprising the above-described flame-retardant resin composition.

ADVANTAGEOUS EFFECTS OF INVENTION

The present invention may provide the flame-retardant agent composition capable of minimizing generation of the volatile matters and the gases at the time of kneading the resin composition and molding the article and capable of minimizing the mold fouling, etc. and may also provide the flame-retardant resin composition containing the same and the molded article comprising the same.

Namely, the flame-retardant agent composition of the present invention may solve the above-described problems and impart excellent flame retardancy and durability to the resin; and the flame-retardant agent composition may be prepared only through the after-treatment step for removing the used solvents and catalysts after the reaction production without carrying out a special purification process such as recrystallization or crystallization.

Moreover, the flame-retardant agent composition of the present invention further exerts the above-described excellent effects in the case where a content of a compound represented by the formula (III):

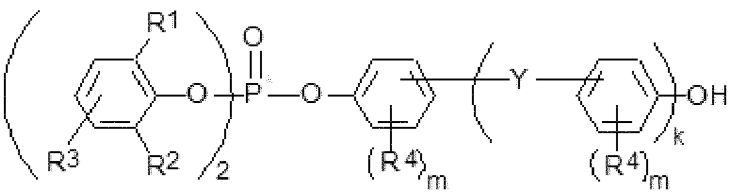

(III)

wherein $R^1$, $R^2$, $R^3$, $R^4$, Y, k and m are as defined in the general formula (I) is 1.0% by area or less when the organophosphorous compound is determined by GPC.

In addition, the flame-retardant agent composition of the present invention further exerts the above-described excellent effects in the case of meeting any one of the following conditions.

- A combination of the organophosphorous compound represented by the general formula (I) and the compound represented by the formula (II) is tetrakis(2,6-dimethylphenyl)-m-phenylene-bisphosphate and tris(2,6-dimethylphenyl)phosphate; tetrakis(2,6-dimethylphenyl)-p-phenylene-bisphosphate and tris(2,6-dimethylphenyl)phosphate; or tetrakis(2,6- dimethylphenyl)-4,4'-diphenylenebisphosphate and tris(2,6-dimethylphenyl)phosphate.
- A combination of the organophosphorous compound represented by the general formula (I) and the compound represented by the formula (III) is tetrakis(2,6-dimethylphenyl)-m-phenylene-bisphosphate and bis(2,6-dimethylphenyl)-3-hydroxyphenylphosphate; tetrakis(2,6-dimethylphenyl)-p-phenylene-bisphosphate and bis(2,6-dimethylphenyl)-4-hydroxyphenylphosphate; or tetrakis(2,6- dimethylphenyl)-4,4'-diphenylenebisphosphate and bis(2,6-dimethylphenyl)-4'-hydroxyphenyl-4-phenylphosphate.
- A combination of the organophosphorous compound represented by the general formula (I), the compound represented by the formula (II) and the compound represented by the formula (III) is tetrakis(2,6-dimethylphenyl)-m-phenylene-bisphosphate, tris(2,6-dimethylphenyl)phosphate and bis(2,6-dimethylphenyl)-3-hydroxyphenylphosphate.
- The flame-retardant agent composition has 10% or less of heat loss under a differential thermogravimetric analysis when heated at an increased temperature rate of 10°C/min and maintained at 250°C for 300 minutes.

The flame-retardant resin composition of the present invention further exerts the above-described excellent effects in the case of containing the flame-retardant agent composition at a proportion of 0.1 to 100 parts by weight with respect to 100 parts by weight of the resin.

BRIEF DESCRIPTION OF DRAWINGS

[Figure 1] Figure 1 is a graph indicating results of a heat analysis of flame-retardant agent compositions of Example 1 and Comparative Example 1.
[Figure 2] Figure 2 is an enlarged view of a range from 300 to 400°C indicated in Fig. 1.
[Figure 3] Figure 3 is a graph indicating results of a heat analysis of flame-retardant agent compositions of Example 2 and Comparative Example 2.

DESCRIPTION OF EMBODIMENTS

*1. Flame-retardant agent composition*

A flame-retardant agent composition of the present invention contains an organophosphorous compound (hereinafter also referred to as "an aromatic diphosphate (I)") represented by the general formula (I):

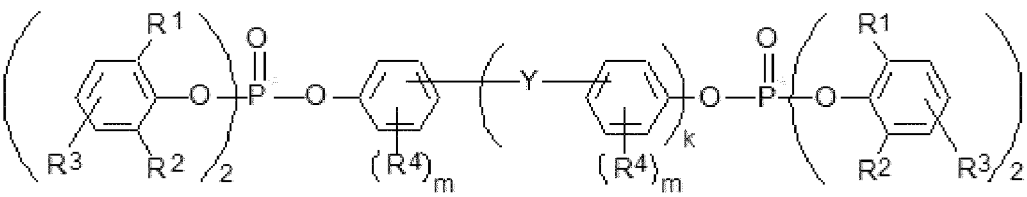

(I)

wherein $R^1$ and $R^2$ each independently represent an alkyl group having 1 to 5 carbon atoms; $R^3$ and $R^4$ each independently represent a hydrogen atom or an alkyl group having 1 to 5 carbon atoms; Y represents a bond or a group $-CH_2-$, $-C(CH_3)_2-$, -S-, $-SO_2-$, -O-, -CO- or - N=N-; k represents 0 or 1; and m represents an integer of 0 to 4 and has a property such that a content of a compound (hereinafter also referred to as "an aromatic monophosphate (II)") represented by the formula (II):

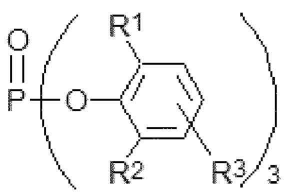

(II)

wherein $R^1$, $R^2$ and $R^3$ are as defined in the general formula (I) is 1.8% by area or less when the organophosphorous compound is determined by GPC.

The aromatic monophosphate (II) content of "1.8% by area or less" determined by GPC means that the content is "more than 0% by area and 1.8% by area or less." The lower limit of the aromatic monophosphate (II) content is preferably 0.01% by area, more preferably 0.001% by area and even more preferably 0.0001% by area; and its upper limit is preferably 1.7% by area, more preferably 1.6% by area, even more preferably 1.5% by area, further preferably 1.4% by area, further more preferably 1.3% by area, particularly preferably 1.2% by area, notably preferably 1.1% by area, and especially preferably 1.0% by area.

A specific content (% by area) of the aromatic monophosphate (II) determined by GPC is, for example, 0.0001, 0.0005, 0.001, 0.005, 0.01, 0.05, 0.1, 0.2, 0.3, 0.4, 0.5, 0.6, 0.7, 0.8, 0.9, 1.0, 1.1, 1.2, 1.3, 1.4, 1.5, 1.6, 1.7 or 1.8.

The content of the aromatic diphosphate (I) determined by GPC is preferably 96% by area or more, more preferably 96.5% by area or more, and even more preferably 97% by area or more. The upper limit of the aromatic diphosphate (I) content is theoretically 99.99% by area; however, preferably 99% by area, more preferably 99.5% by area and even more preferably 99.9% by area.

A specific content (% by area) of the aromatic diphosphate (I) determined by GPC is, for example, 96, 96.5, 97.0, 97.5, 98.0, 98.5, 99.0, 99.1, 99.2, 99.3, 99.4, 99.5, 99.6, 99.7, 99.8 or 99.9.

The flame-retardant agent composition of the present invention has a property such that a content of a compound (hereinafter also referred to as "a phosphorous compound (III) having a hydroxyphenyl group") represented by the formula (III):

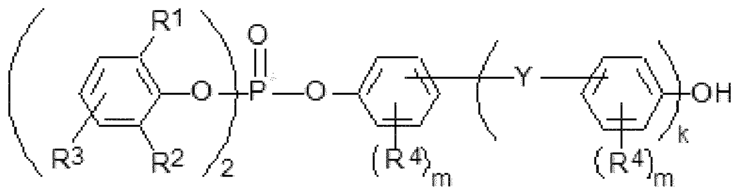
(III)

wherein $R^1$, $R^2$, $R^3$, $R^4$, Y, k and m are as defined in the general formula (I) is preferably 1.0% by area or less when the organophosphorous compound is determined by GPC.

The phosphorous compound (III) content of "1.0% by area or less," which has the hydroxyphenyl group, determined by GPC means that the content is "more than 0% by area and 1.0% by area or less." The lower limit of the phosphorous compound (III) content is preferably 0.01% by area, more preferably 0.001% by area and even more preferably 0.0001% by area; and its upper limit is preferably 0.9% by area, more preferably 0.8% by area and even more preferably 0.7% by area.

A specific content (% by area) of the phosphorous compound (III) having the hydroxyphenyl group determined by GPC is, for example, 0.0001, 0.0005, 0.001, 0.005, 0.01, 0.05, 0.1, 0.2, 0.3, 0.4, 0.5, 0.6, 0.7, 0.8, 0.9 or 1.0.

"The alkyl group having 1 to 5 carbon atoms" represented by $R^1$ and $R^2$ in the general formula (I) may be a linear or branched alkyl group having 1 to 5 carbon atoms and includes, for example, methyl, ethyl, propyl, isopropyl, n-butyl, isobutyl, tert-butyl, n-pentyl, isopentyl and neo-pentyl. Among them, the methyl group and the ethyl group are preferable; and the methyl group is particularly preferable, in that the flame-retardant agent composition as a final product or the aromatic diphosphate (I) contained in the final product becomes high in phosphorous content percentage.

$R^3$ and $R^4$ in the general formula (I) represent a hydrogen atom or an alkyl group having 1 to 5 carbon atoms; and "the alkyl group having 1 to 5 carbon atoms" may be a linear or branched alkyl group having 1 to 5 carbon atoms and includes, for example, methyl, ethyl, propyl, isopropyl, n-butyl, isobutyl, tert-butyl, n-pentyl, isopentyl and neo-pentyl. Among them, the hydrogen atom and the methyl group are preferable; and the hydrogen atom is particularly preferable, in that the flame-retardant agent composition as a final product or the aromatic diphosphate (I) contained in the final product becomes high in phosphorous content percentage.

Specifically, the aromatic diphosphate (I) and the aromatic monophosphate (II) are preferably a combination of tetrakis(2,6-dimethylphenyl)-m-phenylene-bisphosphate and tris(2,6-dimethylphenyl)phosphate; tetrakis(2,6-dimethylphenyl)-p-phenylene-bisphosphate and tris(2,6-dimethylphenyl)phosphate; or tetrakis (2,6- dimethylphenyl)-4,4'-diphenylenebisphosphate and tris(2,6-dimethylphenyl)phosphate; however, the combination of tetrakis(2,6-dimethylphenyl)-m-phenylene-bisphosphate and tris(2,6-dimethylphenyl)phosphate or of tetrakis(2,6- dimethylphenyl)-4,4'-diphenylenebisphosphate and tris(2,6-dimethylphenyl)phosphate is more preferable; and the combination of tetrakis(2,6-dimethylphenyl)-m-phenylene-bisphosphate and tris(2,6-dimethylphenyl)phosphate is particularly preferable.

Specifically, the aromatic diphosphate (I) and the phosphorous compound (III) having the hydroxyphenyl group are preferably a combination of tetrakis(2,6-dimethylphenyl)-m-phenylene-bisphosphate and bis(2,6-dimethylphenyl)-3-hydroxyphenylphosphate; tetrakis(2,6-dimethylphenyl)-p-phenylene-bisphosphate and bis(2,6-dimethylphenyl)-4-hydroxyphenylphosphate; or tetrakis(2,6- dimethylphenyl)-4,4'-diphenylenebisphosphate and bis(2,6-dimethylphenyl)-4'-hydroxyphenyl-4-phenylphosphate; however, the combination of tetrakis(2,6-dimethylphenyl)-m-phenylene-bisphosphate and bis(2,6-dimethylphenyl)-3-hydroxyphenylphosphate or of tetrakis (2,6- dimethylphenyl)-4,4'-diphenylenebisphosphate and bis(2,6-dimethylphenyl)-4'-hydroxyphenyl-4-phenylphosphate is more preferable; and the combination of tetrakis(2,6-dimethylphenyl)-m-phenylene-bisphosphate and bis(2,6-dimethylphenyl)-3-hydroxyphenylphosphate is particularly preferable.

Specifically, the aromatic diphosphate (I), the aromatic monophosphate (II) and the phosphorous compound (III) having the hydroxyphenyl group are preferably a combination of tetrakis(2,6-dimethylphenyl)-m-phenylene-bisphosphate, tris(2,6-dimethylphenyl)phosphate and bis(2,6-dimethylphenyl)-3-hydroxyphenylphosphate; of tetrakis(2,6-dimethylphenyl)-p-phenylene-bisphosphate, tris(2,6-dimethylphenyl)phosphate and bis(2,6-dimethylphenyl)-4-hydroxyphenylphosphate; or of tetrakis(2,6-dimethylphenyl)-4,4'-diphenylenebisphosphate, tris(2,6-dimethylphenyl)phosphate and bis(2,6-dimethylphenyl)-4'-hydroxyphenyl-4-phenylphosphate; however, the combination of tetrakis(2,6-dimethylphenyl)-m-phenylene-bisphosphate, tris(2,6-dimethylphenyl)phosphate and bis(2,6-dimethylphenyl)-3-hydroxyphenylphosphate or of tetrakis(2,6-dimethylphenyl)-4,4'-diphenylenebisphosphate, tris(2,6-dimethylphenyl)phosphate and bis(2,6-dimethylphenyl)-4'-hydroxyphenyl-4-phenylphosphate is more preferable; and the combination of tetrakis(2,6-dimethylphenyl)-m-phenylene-bisphosphate, tris(2,6-dimethylphenyl)phosphate and bis(2,6-dimethylphenyl)-3-hydroxyphenylphosphate is particularly preferable.

The flame-retardant agent composition of the present invention further contains simultaneously a phosphorous compound represented by the formula (IV):

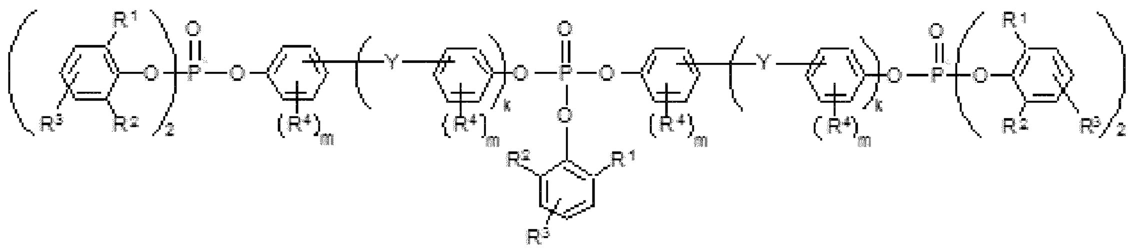

(IV)

wherein $R^1$, $R^2$, $R^3$, $R^4$, Y, k and m are as defined in the general formula (I).

The compound (hereinafter also referred to as "an aromatic triphosphate (IV)") represented by the formula (IV) does not cause any of the above-described problems because this compound is large in molecular weight and thus does not volatilize and also does not have any hydroxyphenyl group while the compound reduces purity of the aromatic diphosphate (I), with the result that the compound is desirable to have a low content.

The flame-retardant agent composition of the present invention only slightly generates volatile matters and gases during the kneading of a resin composition and the molding of an article and is capable of minimizing mold fouling, etc.

As will be described in Examples, this signifies that the molding of engineering plastics, super engineering plastics, etc. carried out at approximately 300°C brings about less heat loss. Accordingly, the flame-retardant agent composition of the present invention is preferably 10% or less of heat loss under a differential thermogravimetric analysis of the aromatic diphosphate (I) when heated at an increased temperature rate of 10°C/min and maintained at 250°C for 300 minutes.

The heat loss of "10% or less" means that the heat loss is "more than 0% and 10% or less." The lower limit of the heat loss is preferably 5.0% and more preferably 3.0%, and its upper limit is preferably 9.8% and more preferably 9.5%.

A specific heat loss (%) of the flame-retardant agent composition under the above-described conditions is, for example, 0.1, 0.2, 0.3, 0.4, 0.5, 0.6, 0.7, 0.8, 0.9, 1.0, 1.5, 2.0, 2.5, 3.0, 3.5, 4.0, 4.5, 5.0, 5.5, 6.0, 6.5, 7.0, 7.5, 8.0, 8.5, 9.0, 9.1, 9.2, 9.3, 9.4, 9.5, 9.6, 9.7, 9.8, 9.9 or 10. The flame-retardant agent composition of the present invention is desirable to have an acid value of 1.0 KOH mg/g or less. The flame-retardant agent composition having the acid value of the above-mentioned range has a tendency to favorably suppress deterioration of impact resistance, mechanical properties, flame resistance, etc. of the resin composition during the kneading of the resin composition and the molding of the article, in the case where the resin composition is exposed to a high-temperature-and-high-humidity environment, and during use of the molded article of resin.

The acid value of "1.0 KOH mg/g or less" means that the acid value is "more than 0 KOH mg/g and 1.0 KOH mg/g or less." The lower limit of the acid value is preferably 0.01 KOH mg/g and more preferably 0.001 KOH mg/g, and its upper limit is preferably 0.8 KOH mg/g and more preferably 0.5 KOH mg/g.

The acid value may be obtained, for example, by weighing about 10 g of a sample; placing it in a conical flask; dissolving it in 10 g of xylene; dissolving the obtained solution in ethyl alcohol completely; titrating it by an N/10 sodium hydroxide solution with use of a BTB (bromthymol blue) solution as an indicator; and using a titer thereof. In Examples, acid values are measured in this way.

*2. Preparation of flame-retardant agent composition*

The flame-retardant agent composition of the present invention may be obtained preferably by a preparation method comprising:

Step 1 of reacting an aromatic monohydroxy compound (hereinafter also referred to as "an aromatic monohydroxy compound (V)") represented by the general formula (V) having a steric hindrance at the ortho position:

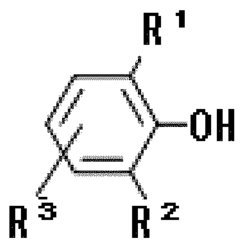

(V)

wherein $R^1$, $R^2$ and $R^3$ are as defined in the general formula (I)

with a phosphorus oxyhalide in the presence of a Lewis acid catalyst within a temperature range from 100 to 160°C and of removing an unreacted phosphorus oxyhalide under a reduced pressure to obtain a diaryl phosphorohalidate (hereinafter also referred to as "a diaryl phosphorohalidate (VI)") represented by the general formula (VI):

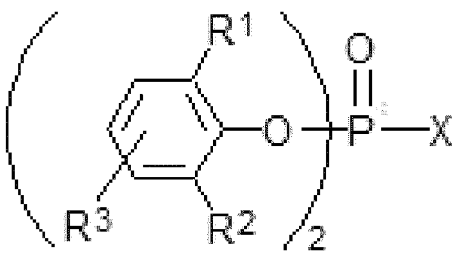

(VI)

wherein $R^1$, $R^2$ and $R^3$ are as defined in the general formula (I); and X represents a halogen atom and

Step 2 of reacting the reaction product obtained in Step 1 with an aromatic dihydroxy compound (VII) represented by the general formula (VII) having 0.5 mol with respect to 1 mol of a halogen contained in the reaction product:

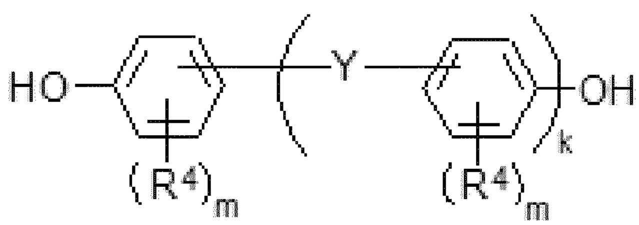

(VII)

wherein $R^4$, Y, k and m are as defined in the general formula (I) in the presence of a Lewis acid catalyst to obtain the aromatic diphosphate (I) represented by the general formula (I).

Through this preparation method, the flame-retardant agent composition of the present invention having a specific composition may be obtained only by an after-treatment step for removing the used solvents and catalysts after the reaction production. Namely, the above-described preparation method does not require a separate purification process such as recrystallization or crystallization for removing the aromatic monophosphate (II) as a by-product.

A reaction temperature during Step 1 is desirable to be within a range from 100 to 180°C.

Under the traditional preparation methods, a reaction temperature during Step 1 is from 50 to 200°C, and preferably 100 to 200°C; and the traditional preparation methods are carried out industrially at approximately 180°C. Generally, the higher a reaction temperature is, the faster a reaction rate is; therefore, a reaction time is shortened even if the same contents react, with the result that the traditional preparation methods are industrially advantageous in this respect. To the inventors' knowledge, however, in the case where a reaction temperature exceeds 180°C during Step 1, the aromatic monophosphate (II) is likely be produced; and a content of the aromatic monophosphate (II) in a flame-retardant agent composition may not remain at 1.8% by area or less determined by GPC, with the result that such temperatures are not desirable. The upper limit of the reaction temperature during Step 1 is, therefore, preferably 175°C and more preferably 170°C.

In the case where a reaction temperature is lower than 100°C during Step 1, a reaction rate becomes low; and the reaction requires a long period of time to be completed, with the result that such temperatures are not desirable. The lower limit of the reaction temperature is, therefore, preferably 100°C, more preferably 110°C and even more preferably 120°C.

As described above, the traditional preparation methods produce the flame-retardant agent composition having more amount of the aromatic monophosphate (II) than a specified amount of the flame-retardant agent composition of the present invention and thus require a purification process - that repeats procedures such as dissolution in the solvents, precipitation (crystallization) from the mixed solution, separation (filtration), and drying - besides the after-treatment step for removing the used solvents and catalysts in order to remove the aromatic monophosphate (II) and to obtain the flame-retardant agent composition of the present invention.

This purification process not only increases the number of the steps but also requires the solvents and heating and/cooling energy and needs to process the used solvents, with the result that this purification process leads to an increase in product cost and is industrially disadvantageous.

On the other hand, the above-described preparation method is capable of providing the flame-retardant agent composition of the present invention without such a purification process and is highly advantageous in an industrial respect.

In the following, Step 1 and Step 2 will be explained in detail on the basis of reaction scheme.

(1) Step 1

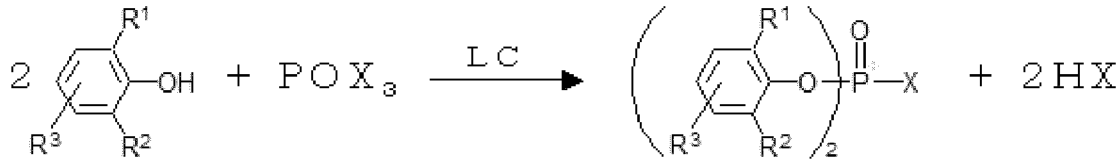


(V) (VI)

wherein $R^1$, $R^2$ and $R^3$ are as defined in the general formula (I); X is a halogen atom; and LC is a Lewis acid catalyst.

Specific examples of the aromatic monohydroxy compound (V) include 2,6-xylenol, 2,3,6-trimethylphenol and 2,4,6-trimethylphenol; and 2,6-xylenol is particularly preferable for the reason that this compound is easily obtainable and increases a content percentage of phosphorus in the flame-retardant agent composition as a final product or a content percentage of phosphorus in the aromatic diphosphate (I) contained in the final product. POX3 represents a phosphorus oxyhalide. Used as the halogen atom represented by X is fluorine, chlorine, bromine or iodine, of which chlorine and bromine are preferable; and chlorine is particularly preferable.

Namely, as the phosphorus oxyhalide, phosphorus oxychloride and phosphorus oxybromide are preferable; and phosphorus oxychloride is particularly preferable in terms of cost and obtainability.

Used as the Lewis acid catalyst (LC) is, for example, aluminum chloride, magnesium chloride, titanium tetrachloride, antimony pentachloride, zinc chloride or tin chloride, of which magnesium chloride is particularly preferable. These compounds may be used as a mixture of two or more kinds thereof.

An amount of the catalyst to be used is preferably 0.1 to 5.0% by weight with respect to the phosphorus oxyhalide, more preferably 0.3 to 3.0% by weight, and even more preferably 0.5 to 2.0% by weight.

A mole ratio between the phosphorus oxyhalide and the aromatic monohydroxy compound (V) used in Step 1 as raw material compounds may be appropriately adjusted according to production scale, etc.

In Step 1, a reaction solvent is not necessarily required but may be used optionally. The solvent to be used is not particularly limited as long as this solvent is inactive against the reactions; and examples of the solvent include organic solvents such as xylene, toluene, chlorobenzene and dichlorobenzene. These solvents may be used as a mixture of two or more kinds thereof.

A reaction time of Step 1 is normally 4 to 18 hours.

In Step 1, pressure in a reaction system is reduced after atmospheric dehydrohalogenation in order to remove a hydrogen halide as a by-product of the reaction from the reaction system and to accelerate the reaction.

In this case, it is desirable to remove the hydrogen halide and the phosphorus oxyhalide under a reduced pressure of 30 kPa or less.

However, in the case where the entire process of Step 1 is carried out at 170 to 180°C, a reaction rate increases; and the phosphorus oxyhalide easily becomes the aromatic monophosphate (II); therefore, the atmospheric dehydrohalogenation is carried out at 120 to 140°C; and then it is desirable to carry out the first half of the vacuum dehydrohalogenation at 120 to 140°C and to carry out the second half of the vacuum dehydrohalogenation at 160 to 170°C.

(2) Step 2

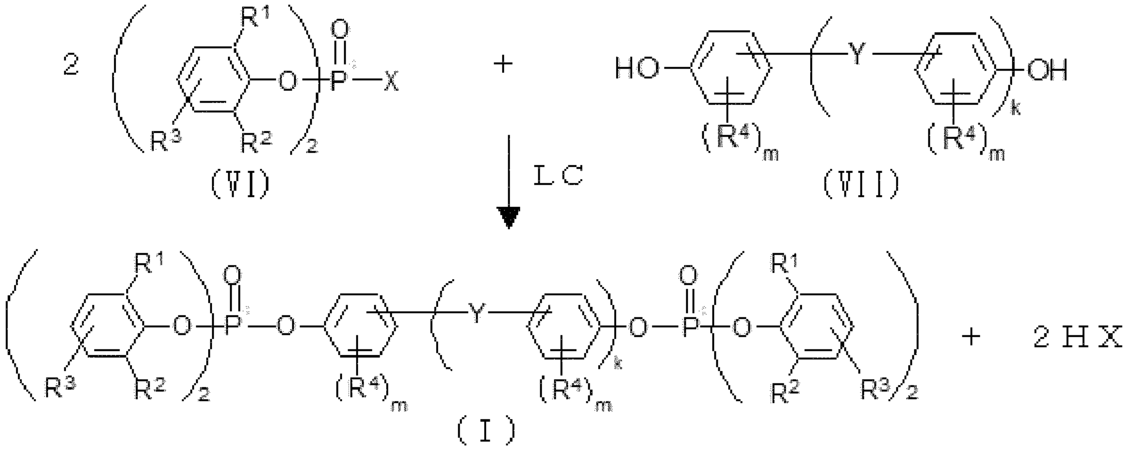

wherein $R^1$, $R^2$, $R^3$, $R^4$, Y, k and m are as defined in the general formula (I); X is as defined in the reaction scheme of Step 1; and LC represents a Lewis acid catalyst.

Specific examples of the aromatic dihydroxy compound (VII) include hydroquinone, resorcinol, pyrocatechol, 4,4'-biphenol, 3,3',5,5'-tetramethyl-4,4'-biphenol, bisphenol A, bisphenol S, bisphenol F, tetramethyl bisphenol A, tetramethyl bisphenol F, 4,4'-dihydroxydiphenyl ether and 4,4'-thiodiphenol, of which hydroquinone, resorcinol and 4,4'-biphenol are particularly preferable for the reason that these compounds are easily obtainable and increase a content percentage of phosphorus in the flame-retardant agent composition as a final product or a content percentage of phosphorus in the aromatic diphosphate (I) contained in the final product.

As the Lewis acid catalyst (LC) used for the reaction in Step 2 there may be mentioned the Lewis acid catalyst used in Step 1; and the Lewis acid catalyst used in Step 1 may be used for the reaction in Step 2 as it is without being removed after the reaction of Step 1, or an additional Lewis acid catalyst may be used. As the additional Lewis acid catalyst, aluminum chloride is particularly desirable. Alternatively, an amine such as triethylamine and tributylamine may be used instead of or in combination with the Lewis acid catalyst.

An amount of the catalyst used in Step 2 is preferably 0.1 to 8.0% by weight with respect to the phosphorus oxyhalide used in Step 1. More preferably, a total amount of the catalysts ranges from 1.3 to 6.0% by weight, and even more preferably 1.5 to 5.0% by weight, after 1.0 to 3.0% by weight of aluminum chloride is added.

Step 2 is to prepare the aromatic diphosphate (I) by reacting the diaryl phosphorohalidate (VI) with the aromatic dihydroxy compound (VII).

Step 1, however, does not provide a 100% pure diaryl phosphorohalidate (VI) as described above; therefore, "the reaction product obtained in Step 1" contains by-products such as the aromatic monophosphate (II) and an arylphosphoro dihalidate besides the diaryl phosphorohalidate (VI).

To obtain the flame-retardant agent composition of the present invention, it is desirable to use in Step 2 the reaction product obtained in Step 1 and 0.5 mol of the aromatic dihydroxy compound (VII) with respect to 1 mol of the halogen contained in the reaction product.

An amount (indicated by the necessary mole number M) of the aromatic dihydroxy compound (VII) to be used may be calculated by the following formula from a total weight (A g) of the reaction product obtained in Step 1, a concentration (B% by weight) of the halogen atom contained therein, and an atomic weight (C) of the halogen.

$$M = A \times (B/100)/C \times (1/2)$$

In this way the amount of the aromatic dihydroxy compound (VII) to be used may be accurately adjusted in Step 2 so that the flame-retardant agent composition may be obtained containing 1.8% by area or less of the aromatic monophosphate (II) determined by GPC and 1.0% by area or less of the phosphorous compound (III) having the hydroxyphenyl group.

A reaction temperature during Step 2 is usually 50 to 250°C, preferably 100 to 200°C, and more preferably 150 to 180°C.

A reaction time of Step 2 is normally 4 to 10 hours.

Pressure in a reaction system is desirable to be reduced in order to remove a hydrogen halide as a by-product of the reaction from the reaction system and to accelerate the reaction. The reduced pressure is preferably 30 kPa or less, and more preferably 20 kPa or less.

(3) Implementation of Step 1 and Step 2 carried out on industrial scale

In the case where the above-described Step 1 and Step 2 are carried out on an industrial scale, the aromatic monohydroxy compound (V) easily becomes in a condition to be 2 mol or more with respect to 1 mol of the phosphorus oxyhalide; and the aromatic monophosphate (II) is easily produced, because the hydrogen halide, which is produced as the by-product during the preparation of the diaryl phosphorohalidate (VI) in Step 1, and the phosphorus oxyhalide have a notable tendency to easily evaporate. Accordingly, the upper limit of the reaction temperature during the first half of the atmospheric dehydrohalogenation and the vacuum dehydrohalogenation of Step 1 is preferably 160°C, more preferably 150°C and even more preferably 140°C; and its lower limit is preferably 110°C and more preferably 120°C, while the upper limit of the reaction temperature during the second half of the vacuum dehydrohalogenation is preferably 180°C and more preferably 170°; and its lower limit is preferably 150°C and more preferably 160°C, with the result that it is significantly important that an amount and a reaction rate of the hydrogen halide produced per unit time are controlled and that the production of the aromatic monophosphate (II) is suppressed.

In Step 1, 2 mol of the aromatic monohydroxy compound (V) tends not to produce 1 mol of the diaryl phosphorohalidate (VI); and the larger the industrial scale is and the larger the amount of the hydrogen halide produced per unit time is, the more significant such tendency becomes.

Since Step 1 and Step 2 are usually carried out successively in the same reaction vessel on the industrial scale, Step 2 will be affected directly by the reaction of Step 1. That is, theoretically, the amount of the aromatic dihydroxy compound (VII) in Step 2 should be 1/4 molar equivalents of the amount of the aromatic monohydroxy compound (V) but actually falls below 1/4 molar equivalents. In Step 2, therefore, the amount of the aromatic dihydroxy compound (VII) is stoichiometrically too large; and the aromatic dihydroxy compound (VII) is not completely consumed and remains unreacted if the aromatic dihydroxy compound (VII) is uniformly used having the 1/4 molar equivalents of the amount of the aromatic monohydroxy compound (V) used in Step 1. That is, some hydroxy groups of the aromatic dihydroxy compound (VII) remain in the reaction system. As a result, the phosphorous compound (III) having a hydroxyphenyl group is contained in the flame-retardant agent composition.

Here, the "industrial scale" means that a total amount of raw materials including the organic solvents, etc. to be put in the reaction vessel to react the aromatic dihydroxy compound (VII) with the diaryl phosphorohalidate (VI) in Step 2 is on a scale of normal industrial production. On the scale, the specific total amount is preferably 5 liters or more, more preferably 30 liters or more, even more preferably 100 liters or more, and particularly preferably 300 liters or more.

In addition, the specific total amount of these raw materials is preferably 20,000 liters or less, and more preferably 10,000 liters or less, considering constraints of the reactor.

(4) After-treatment step

After the completion of the reactions in Step 2, impurities such as the catalysts in the reactant are washed and removed as an after-treatment step by a commonly known method. For example, the reactant is brought into contact with an aqueous solution of an acid such as hydrochloric acid to extract the impurities into the aqueous solution. On this occasion, an organic solvent may be added to the aqueous solution to prevent the flame-retardant agent composition from solidifying.

As the organic solvent, preferable is an organic solvent that allows more flame-retardant agent composition to dissolve therein at high temperature and less flame-retardant agent composition to dissolve therein at low temperature. Examples of the organic solvent include toluene, xylene, chlorobenzene, dichlorobenzene and a mixed solvent of two or more kinds thereof; however, the organic solvent should not be limited to these.

A treatment temperature is from room temperature to a boiling point of the solvent, and an amount of the organic solvent is not particularly limited as long as the flame-retardant agent composition is not precipitated at the treatment temperature.

(5) Powdering step

An oily matter obtained in Step 2 may be powdered by stressing it with a kneader generally used for kneading plastic materials at a temperature that is 5 to 100°C lower than a melting point of the aromatic diphosphate (I).

"Kneading" means that when several kinds of additives are mixed with a plastic material, the additives are dispersed uniformly in the material by giving shearing force to the additives and the material at the same time.

"Stressing" means the same as the "kneading" in that temperatures of the materials fed to the kneader are equalized and, at the same time, shearing force - i.e., stress - is given to the materials.

Generally, kneaders are categorized into batch kneaders such as mixing rolls, sigmate blade-type kneaders and intensive mixers; and continuous kneaders such as high-speed twin-screw continuous mixers and extruder-type kneaders. When these kneaders are used for solidification as used for the present invention, the continuous kneaders are preferable because these kneaders are capable of compressing a solidified product at the same time as the kneading. In terms of industrial use, the continuous kneaders are advantageous as having higher processing performance.

Used as a particularly suitable kneader is a ko-kneader-type kneader, which is a kind of extruder-type kneaders and is characterized by having strong shearing force, by producing a great kneading effect and by being capable of continuous solidification and powdering; however, the kneader is not particularly limited thereto as long as the kneader produces such effects.

In addition, the kneader is provided with a heating mechanism such as an electrical resistance band heater, a cast-in aluminum heater or a dielectric heating system; and a heating or cooling mechanism by distributing water or oil in a jacket provided to a cylinder or in a pipe provided to a screw, so that a temperature in the kneader may be controlled.

The inside of the kneader needs to be controlled to an appropriate temperature range; and the most appropriate temperature range varies according to thermophysical properties of the oily matter to solidify - in particular, viscosity, fluidity and frictional heat during the kneading - and properties of the apparatus to be used. The temperature is generally 5 to 100°C lower than the melting point of the aromatic diphosphate (I), preferably 10 to 70°C lower, and more preferably 10 to 50°C lower. In the case where the temperature is in this range, an appropriate stress is applied to the compound in the kneader to achieve complete solidification and shortening of the solidification time. Using no solvent for the powdering, this method excludes the step of drying the powder and excludes need to consider purification and recycling of the solvent, being advantageous for industrial production.

Examples of other methods for powdering the oily matter obtained in Step 2 include purification processes such as a recrystallization method, a crystallization method and a fractionation distillation method, all of the methods using an organic solvent; however, the present invention does not use any of these methods because the purification and the recycling of the solvent need to be considered in the case of using the solvent during the purification process as described above, being disadvantageous industrially.

*3. Resin composition*

The flame-retardant agent composition of the present invention is high in purity and quality and can be used as a flame retardant for various thermoplastic resins and theimosetting resins. Examples of the thermoplastic resins include polyethylene resins, chlorinated polyethylene resins, polypropylene resins, polybutadiene resins, polystyrene resins, polyvinyl chloride resins, polyphenylene ether resins, polyphenylene sulfide resins, polycarbonate resins, ABS (acrylonitrile-butadiene-styrene) resins, impact-resistant styrene resins, rubber-modified styrene resins, SAN (styrene-acrylonitrile) resins, ACS resins, polyamide resins, polyimide resins, polyester resins such as PET (polyethyleneterephthalate) resins and PBT (polybutyleneterephthalate) resins, polyacrylic resins, polymethacryl resins, polyetheretherketone resins, polyethersulfone resins, polysulfone resins, polyarylate resins, polyether ketone resins, polyether nitryl resins, polythioether sulfone resins, polybenzimidazole resins, polycarbodiimide resins, liquid crystal polymers, and composite plastics; and they may be used independently or in combination of two or more kinds thereof. Examples of the thermosetting resins include epoxy resins, polyurethane resins, polyimide resins, phenol resins, novolac resins, resol resins, polyetherimide resins, melamine resins, urea resins, unsaturated polyester resins and diallyl phthalate resins; and they may be used independently or in combination of two or more kinds thereof.

Of the above-mentioned resins, as examples of the flame-retardant agent composition of the present invention that fully exerts its effects there may be mentioned engineering plastics and super engineering plastics that are high-performance and have a high molding process temperature and heatproof temperature, such as polyphenylene ether resins, polyphenylene sulfide resins, polycarbonate resins, ABS resins, impact-resistant styrene resins, rubber-modified styrene resins, SAN resins, polyamide resins, polyimide resins, polyester resins, polyacrylic resins, polymethacryl resins, polyetheretherketone resins, polyethersulfone resins, polysulfone resins, polyarylate resins, polyether ketone resins, polyether nitryl resins, polythioether sulfone resins, polybenzimidazole resins, polycarbodiimide resins, liquid crystal polymers, composite plastics, epoxy resins, melamine resins and unsaturated polyester resins; and of these resins, polyphenylene ether resins, polycarbonate resins, ABS resins, impact-resistant styrene resins, rubber-modified styrene resins, polyamide resins, polyester resins and epoxy resins are particularly preferable.

Accordingly, it is desirable that a flame-retardant resin composition of the present invention contains: one or more kinds of the resins selected from polyphenylene ether resins, polycarbonate resins, ABS resins, impact-resistant styrene resins, rubber-modified styrene resins, polyamide resins, polyester resins and epoxy resins; and the flame-retardant agent composition of the present invention.

The flame-retardant agent composition of the present invention is used usually at a proportion of 0.1 to 100

parts by weight, preferably 0.5 to 50 parts by weight, more preferably 1 to 40 parts by weight, and particularly preferably 3 to 30 parts by weight, with respect to 100 parts by weight of the above-mentioned resin.

A specific blending proportion (parts by weight) of the flame-retardant agent composition with respect to 100 parts by weight of the resin is, for example, 0.1, 0.2, 0.3, 0.4, 0.5, 0.6, 0.7, 0.8, 0.9, 1.0, 5, 10, 15, 20, 25, 30, 35, 40, 45, 50, 55, 60, 65, 70, 75, 80, 85, 90, 95 or 100.

If necessary, the flame-retardant resin composition blended with the flame-retardant agent composition of the present invention may contain an additional component that is usually added to resins, to the extent that the effects intrinsic to the resins are not lessened. Examples of the additional component include other flame retardants, anti-drip agents, antioxidizing agents, fillers, lubricants, modifying agents, odorants, antifungus agents, pigments, dyes, heat resisting agents, weather resisting agents, antistatic agents, ultraviolet absorbers, stabilizers, toughening agents, anti-blocking agents, wood flour and starches.

How the flame-retardant agent composition of the present invention is added to the resin is not particularly limited; and examples thereof include a commonly known method in which components are melted and kneaded with a general kneading apparatus such as a single-screw extruder, a twin-screw extruder, a Bumbury mixer, a kneader, a mixer or a roll.

The flame-retardant agent composition of the present invention may be advantageously used for resins having a higher molding temperature - for example, a resin that is kneaded and molded at 160°C or higher in one embodiment, a resin that is kneaded and molded at 180°C or higher in a more preferable embodiment and a resin that is kneaded and molded at 200°C or higher in a particularly preferable embodiment.

*4. Molded article*

The molded article of the present invention comprises the flame-retardant resin composition of the present invention.

When added to a resin as a flame retardant and processed with a molding machine, the flame-retardant agent composition of the present invention does not generate a large amount of gas even at its high processing temperature and does not foul a metal mold so that a high-quality molded article having excellent flame resistance, heat resistance and coloration resistance may be provided.

The flame-retardant agent composition of the present invention is added to the resin and molded by the publicly known method and may provide a desired molded article.

EXAMPLES

The present invention will be described in detail below by way of Preparation Examples and Comparative Preparation Examples together with Examples and Comparative Examples; however, the scope of the present invention should not be limited to these Preparation Examples and Examples.

In the following Preparation Examples and Comparative Preparation Examples, a proportion of each component in the obtained product is indicated by "% by area" of an area of the component as determined by GPC. Apparatuses and measurement conditions for GPC are described below.

Analyzer: product by Tosoh Corporation; model: HLC-8220
Columns: products by Tosoh Corporation; models: TSKgel G1000HXL (7.8 mm × 30 cm) × 2 and TSKguard column HXL-L × 1
Column tank temperature: 40°C
Solvent: tetrahydrofuran (industrial version)
Solvent flow rate: 0.8 ml/min
Detector: RI (built in the apparatus body, polarized refractive index detector)
INTE range: 256 RIU/1V
Injected amount of sample solution: 10 μl (looped tube)
Sample solution: solution obtained by dissolving approximately 0.04 g of sample in 10 ml of tetrahydrofuran
Data processor: product by Tosoh Corporation; model: SC-8010

| | | |
|---|---|---|
| Data processing conditions: | Start time | 10.0 min |
| | Stop time | 25.0 min |
| | Width | 10 |
| | Sensitivity | 0.8 |
| | Drift | 0.1 |

(continued)

| | |
|---|---|
| Minimum area | 0.0 |
| Minimum height | 0.0 |

(Preparation Example 1)

*1. Step 1*

To a one-liter four-necked flask equipped with a stirrer, a thermometer, a dropping device (funnel) and a hydrochloric acid collecting device (condenser connected with a water scrubber), 244 g of 2,6-xylenol as an aromatic monohydroxy compound (V), 14 g of xylene as a solvent and 1.3 g of magnesium chloride as a catalyst (0.9% by weight with respect to phosphorus oxychloride) were put in. The resulting mixed solution was heated under stirring; and when the temperature of the mixed solution reached 120°C, 153 g of phosphorus oxychloride was added thereto dropwise over approximately 2 hours. After completion of the addition, the mixed solution was heated to gradually raise the temperature thereof up to 130°C over 4 hours for reaction to collect 68 g of hydrogen chloride (hydrochloric acid gas) generated through the water scrubber. Thereafter, the pressure in the flask was gradually reduced to 20 kPa at the same temperature (130°C) over 5 hours; and then the temperature was raised to 165°C at the same reduced pressure over 6 hours to remove unreacted phosphorus oxychloride and xylene so as to obtain 322 g of a reaction mixture including di-(2,6-xylyl)phosphoro chloridate as a diaryl phosphorohalidate (VI). In addition, the content percentage of chlorine in the reaction mixture was 10.8% by weight.

*2. Step 2*

Next, 53.8 g of resorcinol as an aromatic dihydroxy compound (VII) (an amount stoichiometrically equivalent to that of di-(2,6-xylyl)phosphoro chloridate) and 3.2 g of aluminum chloride as an additional catalyst (having 2.1% by weight with respect to phosphorus oxychloride used in Step 1 and 3.0% by weight of a catalyst total) were added to the reaction mixture obtained in Step 1. The resulting mixed solution was heated under stirring to gradually raise the temperature thereof up to 170°C over 2 hours to cause a dehydrochlorination reaction. The reaction was continued at the same temperature (170°C) for 6 hours; and the pressure in the flask was gradually reduced to 15 kPa, under which the reaction was further continued for 2 hours to obtain a crude product of an aromatic diphosphate (I).

*3. After-treatment step*

The resulting crude product was heated to 85°C; 90 g of xylene, 10 g of 35% aqueous hydrochloric acid and 100 g of water were added thereto; and the mixture was stirred at the same temperature (85°C) for 1 hour and was allowed to stand to separate an aqueous phase. To the resulting mixture of the crude product and the solvent (xylene) (the concentration of the crude product was approximately 80% by weight), 5 g of 28% aqueous sodium hydroxide and 110 g of water were added. The resulting mixed solution was stirred at 85°C for 1 hour and allowed to stand to separate an aqueous phase.

Subsequently an oil phase of the resulting mixed solution was washed with 130 g of water at a liquid temperature of 85°C to obtain 430 g of the oil phase (the concentration of the aromatic diphosphate (I) was approximately 80% by weight). Xylene was removed from the resulting oil phase under a reduced pressure, and then steam distillation was performed at a temperature of 140°C and at a reduced pressure of 6 kPa to obtain 330 g of an oily matter including the aromatic diphosphate (I).

*4. Powdering step*

To a one-liter four-necked flask equipped with a thermometer and a stirrer having a rotation frequency display function (product by Shinto Scientific Co., Ltd.; model: Heidon-type 3000H), 320 g of the oily matter including the aromatic diphosphate (I) was put in, was allowed to cool to a temperature of 60°C under stirring at a low rotation frequency (a rotation frequency of approximately 100 rpm) and was maintained at the same temperature (60°C) by using a hot-water bath.

Subsequently, 0.1% by weight of the aromatic diphosphate (I) in a crystal state as a crystal nucleus was added to the object being solidified (oily matter); and the mixture was stirred at a rotation frequency of 200 rpm, with the result that the oily matter was completely solidified in 8 minutes.

The resulting solidified product weighing 320 g of the flame-retardant agent composition was white powder and had a melting point of 97 to 98°C and an acid value of 0.20 KOH mg/g.

In addition, the solidified product was measured for its composition by gel permeation chromatography (GPC), resulting in an aromatic diphosphate (I) represented by Compound (1) accounted for 97.9% by area; an aromatic monophosphate (II) represented by Compound (2) accounted for 0.9% by area; a phosphorous compound (III) represented by Compound (3), which has a hydroxyphenyl group, accounted for 0.4% by area; and an aromatic triphosphate (IV) represented by Compound (4) accounted for 0.8% by area (see the structural formulae below).

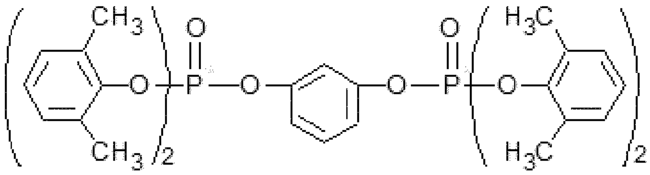

(1)

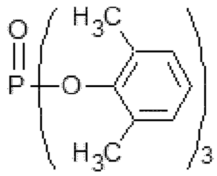

(2)

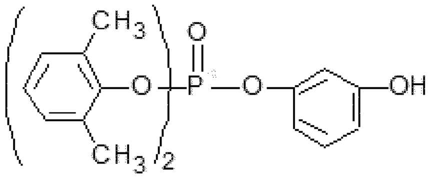

(3)

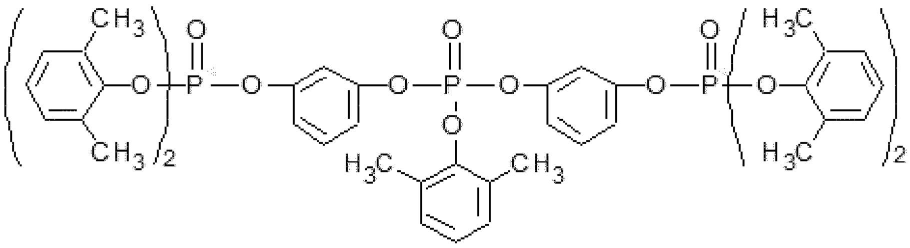

(4)

(Comparative Preparation Example 1)

315 g of a flame-retardant agent composition in the form of white powder was obtained in the same manner as in Step 1 of Example 1 except that a reaction temperature was maintained at 165°C after the temperature of the mixed solution reached 120°C. The flame-retardant agent composition had a melting point of 94 to 95°C and an acid value of 0.25 KOH mg/g.

A composition of the flame-retardant agent composition measured by GPC resulted in an aromatic diphosphate (I) represented by Compound (1) accounted for 96.2% by area; an aromatic monophosphate (II) represented by Compound (2) accounted for 2.3% by area; a phosphorous compound (III) represented by Compound (3), which has a hydroxyphenyl group, accounted for 0.7% by area; and an aromatic triphosphate (IV) represented by Compound (4) accounted for 0.8% by area.

(Example 1 and Comparative Example 1)

Heat loss (%) of the flame-retardant agent compositions in the form of white powder obtained in Preparation Example 1 and in Comparative Preparation Example 1 was measured by using a simultaneous thermogravimetric analyzer under the following measurement conditions.

Analyzer: product by Seiko Instruments, Inc. (currently, Hitachi High-Tech Science Corp.); model: TG/DTA 6200 of Exstar 6000 series
Sample amount: 10 mg
Tray for sample: aluminum

Environment: 150 ml/min of nitrogen gas
Temperature: 30 to 530°C; increased temperature rate of 10°C/min

The obtained results are indicated in Figure 1, Figure 2 and Table 1.
Figure 1 and Figure 2 are graphs indicating results of a heat analysis of each flame-retardant agent composition; and a horizontal axis indicates temperatures (°C), and a vertical axis on the right indicates heat loss (%). Figure 2 is an enlarged view of a range from 300 to 400°C indicated in Fig. 1.
Table 1 indicates heat loss (%) measured every 10°C in the range of 300 to 400°C; and comparisons thereof.

Table 1

| | Ex 1 | Comp Ex 1 | (Comparisons) |
|---|---|---|---|
| Flame-retardant agent composition | Prep Ex 1 | Comp Prep Ex 1 | |
| Temp (°C) | Heat loss A (%) | Heat loss B (%) | B/A (quotient) |
| 300 | 1.1 | 1.7 | 1.5 |
| 310 | 1.5 | 2.3 | 1.5 |
| 320 | 2.1 | 3.1 | 1.5 |
| 330 | 2.8 | 4.3 | 1.5 |
| 340 | 3.9 | 6.0 | 1.5 |
| 350 | 5.6 | 8.1 | 1.4 |
| 360 | 8.3 | 11.0 | 1.3 |
| 370 | 12.1 | 15.0 | 1.2 |
| 380 | 17.3 | 20.2 | 1.2 |
| 390 | 24.3 | 27.5 | 1.1 |
| 400 | 33.9 | 37.0 | 1.1 |

(Example 2 and Comparative Example 2)

The flame-retardant agent compositions in the form of white powder obtained in Preparation Example 1 and in Comparative Preparation Example 1 were heated by using the simultaneous thermogravimetric analyzer in the same manner as in Example 1 and Comparative Example 1; and the temperature of the compositions was raised to 250°C and maintained at this temperature for 5 hours (300 minutes) so as to measure heat loss (%).
The obtained results are indicated in Figure 3 and Table 2.
Figure 3 is a graph indicating results of a heat analysis of each flame-retardant agent composition; and a horizontal axis indicates temperatures (°C), and a vertical axis on the right indicates heat loss (%).
Table 2 indicates heat loss (%) measured every 1 hour (60 minutes) during a retention time; and comparisons thereof.

Table 2

| | Ex 2 | Comp Ex 2 | (Comparisons) |
|---|---|---|---|
| Flame-retardant agent composition | Prep Ex 1 | Comp Prep Ex 1 | |
| Retention time (min) | Heat loss A (%) | Heat loss B (%) | B/A (quotient) |
| 60 | 1.8 | 3.3 | 1.8 |
| 120 | 3.3 | 5.2 | 1.6 |
| 180 | 5.1 | 6.8 | 1.3 |
| 240 | 7.1 | 8.6 | 1.2 |

(continued)

| | Ex 2 | Comp Ex 2 | (Comparisons) |
|---|---|---|---|
| Flame-retardant agent composition | Prep Ex 1 | Comp Prep Ex 1 | |
| Retention time (min) | Heat loss A (%) | Heat loss B (%) | B/A (quotient) |
| 300 | 9.0 | 10.3 | 1.1 |

Figure 1, Figure 2 and Table 1 indicate that Example 1 (the flame-retardant agent composition of Preparation Example 1) has heat loss, which is caused by the increased temperature, lower than that of Comparative Example 1 (the flame-retardant agent composition of Comparative Preparation Example 1).

Especially regarding the temperatures from 300 to 340°C that are close to a temperature for the kneading and the molding of engineering plastics and super engineering plastics, Comparative Example 1 is 1.5 times higher in heat loss than Example 1. This signifies that more volatile matters and gases are generated. Namely, it is found that the flame-retardant agent compositions of Examples generate less volatile matters and gases than the flame-retardant agent composition of Comparative Example 1 and are less likely to cause mold fouling.

Figure 3 and Table 2 indicate that Comparative Example 2 (the flame-retardant agent composition of Comparative Preparation Example 1) has especially high heat loss during initial stages from the beginning of retaining the temperature to 60 minutes thereafter and then has a tendency to have less difference from Example 2 (the flame-retardant agent composition of Preparation Example 1) that may be caused by less volatile matters along with the passing of time.

Accordingly, it is found that the flame-retardant agent composition of Example 2 has a high reducing effect of the volatile matters and the gases at a high temperature at the time of kneading the resin composition and molding an article.

(Examples 3 and 4 and Comparative Examples 3 and 4)

Used as resins were a modified PPE resin (PPE + PS; product by SABIC Innovative Plastics; product name: Noryl Resin 731) and a PC/ABS alloy resin (product by Daicel Polymer, Ltd.; product name: Novalloy S of general grade S-1500); and used as an anti-drip agent, which is an additive, was a fluororesin (product by Du Pont-Mitsui Fluorochemicals Co., Ltd.; product name: Teflon, registered trademark, PEFE fine powder 6-J).

Raw materials used in the preparation of the resin compositions as indicated in Table 3 were mixed by using a mixer and then were passed through an extruder maintained at 250 to 300°C to obtain compound pellets. The resulting pellets were put in an injection molding machine and molded at 250 to 300°C to obtain test pieces.

The resulting test pieces were evaluated for flame retardancy (vertical flammability) under the following conditions.
Test method: according to UL-94 (average flame-out time of 5 samples)
Test piece: 1.6 mm in thickness
Evaluation: ranks V-0, V-1 and V-2 according to regulation
Table 3 indicates the obtained results together with the proportion of the resin compositions each.

Table 3

| | Proportion (parts by weight) | | | | Evaluation |
|---|---|---|---|---|---|
| | Resins | | Flame retardant | Additive | Flame retardancy (UL-94) |
| | Modified PPE | PC/ABS | Flame-retardant agent composition of Prep Ex 1 | Fluororesin | |
| Ex 3 | 100 | - | 18 | | V-0 |
| Ex 4 | - | 100 | 16 | 0.4 | V-0 |
| Comp Ex 3 | 100 | - | - | - | Completely destroyed by fire |
| Comp Ex 4 | - | 100 | - | - | Completely destroyed by fire |

It is found from the results indicated in Table 3 that the molded articles comprising the flame-retardant resin

composition of Example 3 or Example 4 containing the flame-retardant agent composition of the present invention (the flame-retardant agent composition of Preparation Example 1) are superior in flame retardancy to the molded articles comprising the resin composition of Comparative Example 3 or Comparative Example 4 that does not contain the flame-retardant agent composition of the present invention.

## Claims

1. A flame-retardant agent composition containing an organophosphorous compound represented by the general formula (I):

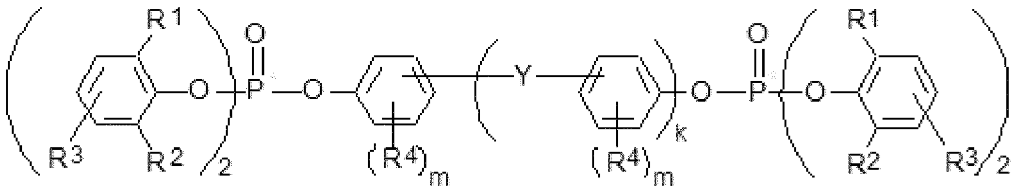

(I)

wherein $R^1$ and $R^2$ each independently represent an alkyl group having 1 to 5 carbon atoms; $R^3$ and $R^4$ each independently represent a hydrogen atom or an alkyl group having 1 to 5 carbon atoms; Y represents a bond or a group $-CH_2-$, $-C(CH_3)_2-$, -S-, - $SO_2$-, -O-, -CO- or -N=N-; k represents 0 or 1; and m represents an integer of 0 to 4 and having a property such that a content of a compound represented by the formula (II):

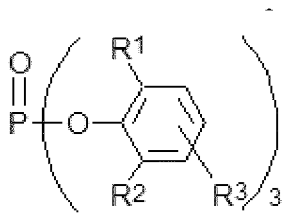

(II)

wherein $R^1$, $R^2$ and $R^3$ are as defined in the general formula (I) is 1.8% by area or less when the organophosphorous compound is determined by gel permeation chromatography (GPC).

2. The flame-retardant agent composition of claim 1, wherein a combination of the organophosphorous compound represented by the general formula (I) and the compound represented by the formula (II) is tetrakis(2,6-dimethylphenyl)-m-phenylene-bisphosphate and tris(2,6-dimethylphenyl)phosphate; tetrakis(2,6-dimethylphenyl)-p-phenylene-bisphosphate and tris(2,6-dimethylphenyl)phosphate; or tetrakis(2,6- dimethylphenyl)-4,4'-diphenylenebisphosphate and tris(2,6-dimethylphenyl)phosphate.

3. The flame-retardant agent composition of claim 1 or 2, wherein a content of a compound represented by the formula (III):

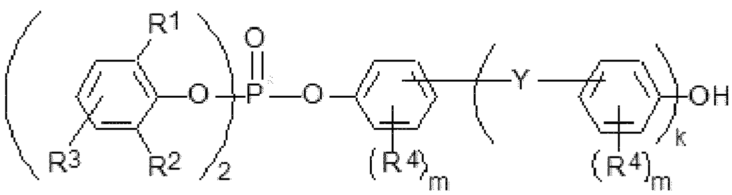

(III)

wherein $R^1$, $R^2$, $R^3$, $R^4$, Y, k and m are as defined in the general formula (I) is 1.0% by area or less when the organophosphorous compound is determined by GPC.

4. The flame-retardant agent composition of claim 3, wherein a combination of the organophosphorous compound

represented by the general formula (I) and the compound represented by the formula (III) is tetrakis(2,6-dimethylphenyl)-m-phenylene-bisphosphate and bis(2,6-dimethylphenyl)-3-hydroxyphenylphosphate; tetrakis(2,6-dimethylphenyl)-p-phenylene-bisphosphate and bis(2,6-dimethylphenyl)-4-hydroxyphenylphosphate; or tetrakis(2,6-dimethylphenyl)-4,4'-diphenylenebisphosphate and bis(2,6-dimethylphenyl)-4'-hydroxyphenyl-4-phenylphosphate.

**5.** The flame-retardant agent composition of claim 3, wherein a combination of the organophosphorous compound represented by the general formula (I), the compound represented by the formula (II) and the compound represented by the formula (III) is tetrakis(2,6-dimethylphenyl)-m-phenylene-bisphosphate, tris(2,6-dimethylphenyl)phosphate and bis(2,6-dimethylphenyl)-3-hydroxyphenylphosphate.

**6.** The flame-retardant agent composition of any one of claims 1to 5, wherein the flame-retardant agent composition has 10% or less of heat loss under a differential thermogravimetric analysis when heated at an increased temperature rate of 10°C/min and maintained at 250°C for 300 minutes.

**7.** A flame-retardant resin composition containing one or more kinds of resins selected from polyphenylene ether resins, polycarbonate resins, ABS resins, impact-resistant styrene resins, rubber-modified styrene resins, polyamide resins, polyester resins and epoxy resins; and the flame-retardant agent composition of any one of claims 1 to 6.

**8.** The flame-retardant resin composition of claim 7 containing the flame-retardant agent composition at a proportion of 0.1 to 100 parts by weight with respect to 100 parts by weight of the resin.

**9.** A molded article comprising the flame-retardant resin composition of claim 7 or 8.

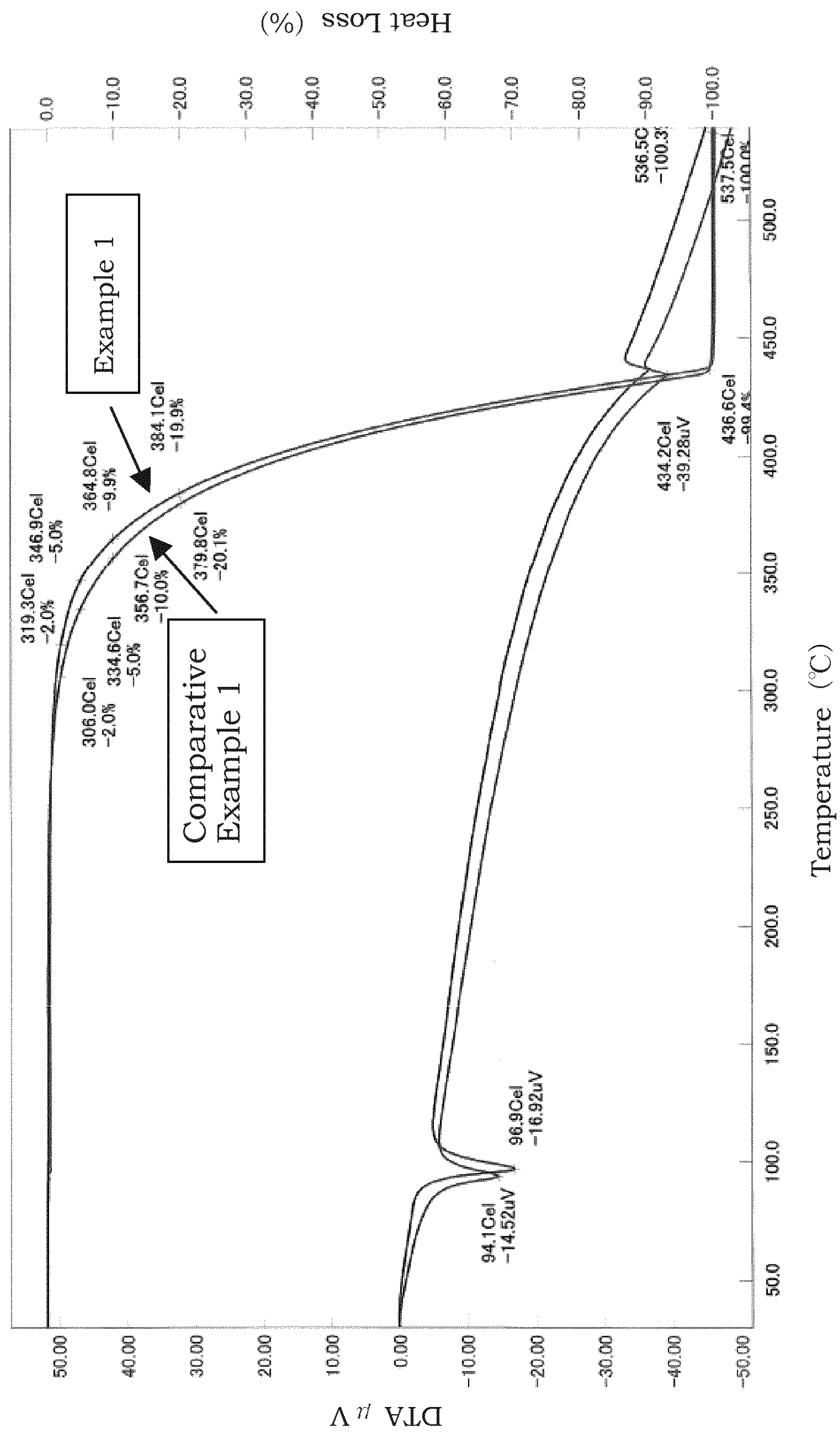
Heat Loss (%)
Example 1
Comparative Example 1
Temperature (℃)
DTA μV

Fig. 1

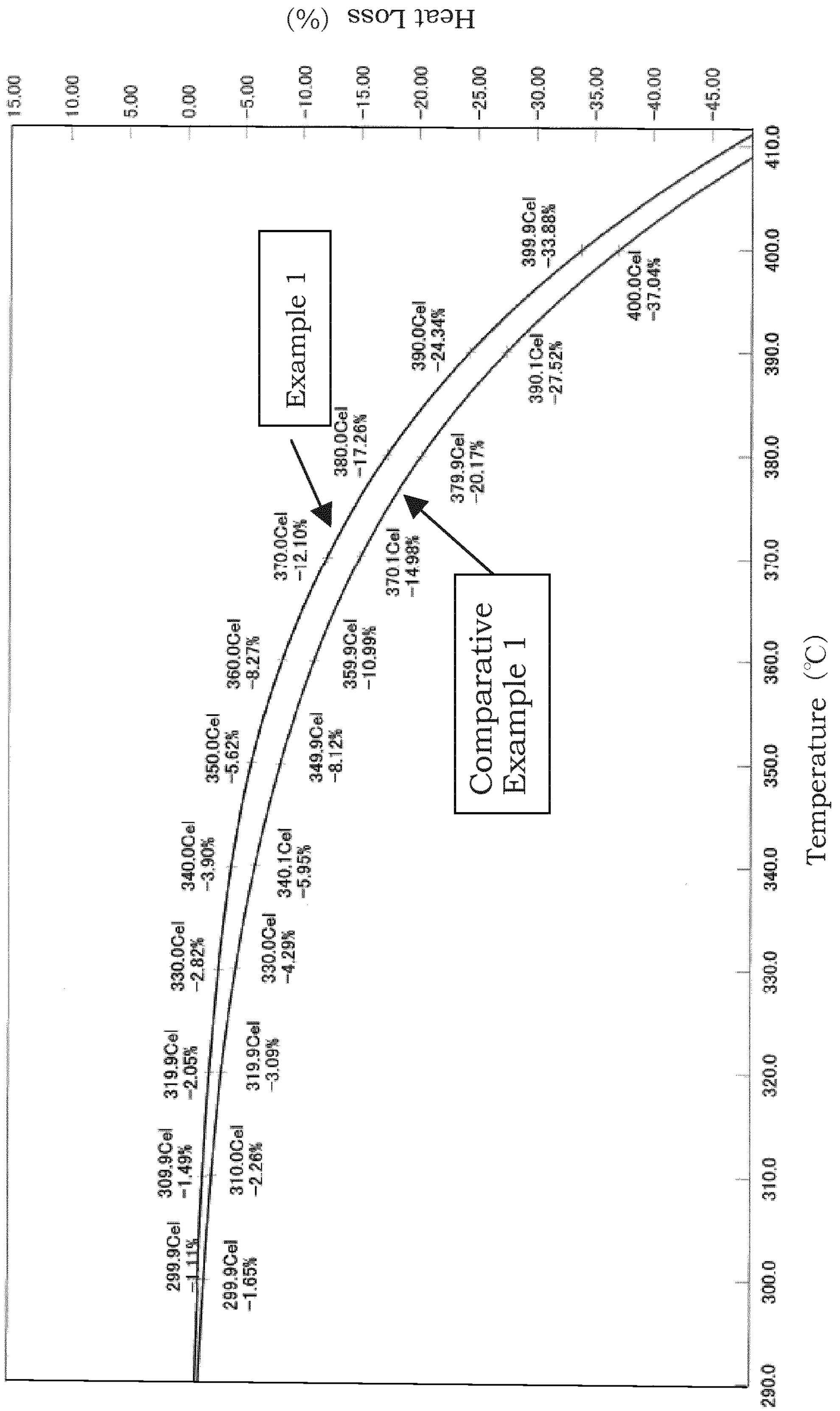
Heat Loss (%)
15.00
10.00
5.00
0.00
-5.00
-10.00
-15.00
-20.00
-25.00
-30.00
-35.00
-40.00
-45.00
Example 1
Comparative Example 1
299.9Cel -1.11%
309.9Cel -1.49%
319.9Cel -2.05%
330.0Cel -2.82%
340.0Cel -3.90%
350.0Cel -5.62%
360.0Cel -8.27%
370.0Cel -12.10%
380.0Cel -17.26%
390.0Cel -24.34%
399.9Cel -33.88%
299.9Cel -1.65%
310.0Cel -2.26%
319.9Cel -3.09%
330.0Cel -4.29%
340.1Cel -5.95%
349.9Cel -8.12%
359.9Cel -10.99%
370.1Cel -14.98%
379.9Cel -20.17%
390.1Cel -27.52%
400.0Cel -37.04%
290.0
300.0
310.0
320.0
330.0
340.0
350.0
360.0
370.0
380.0
390.0
400.0
410.0
Temperature (°C)

Fig. 2

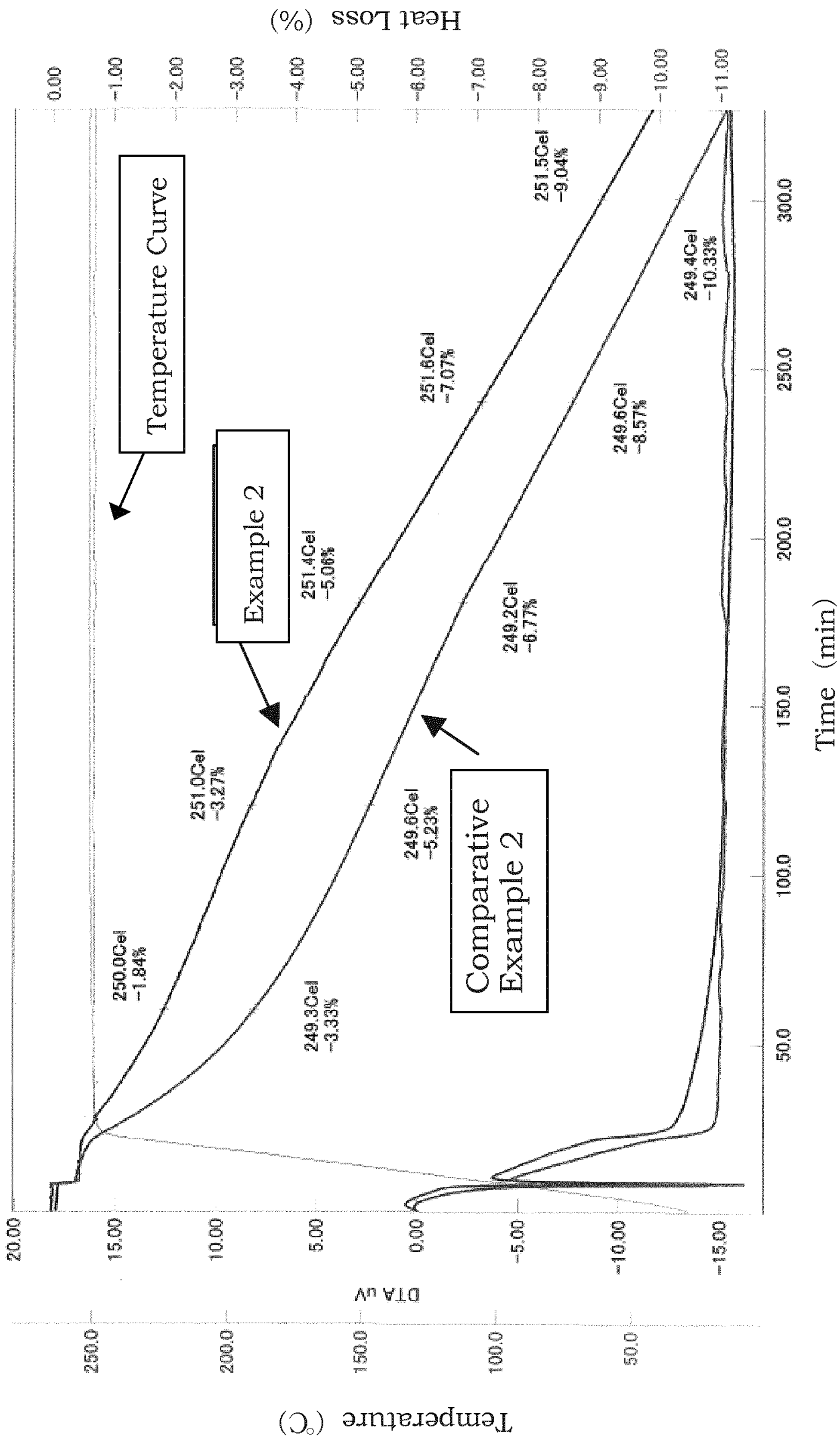
Heat Loss (%)
Temperature Curve
Example 2
Comparative Example 2
250.0Cel −1.84%
249.3Cel −3.33%
251.0Cel −3.27%
249.6Cel −5.23%
251.4Cel −5.06%
249.2Cel −6.77%
251.6Cel −7.07%
249.6Cel −8.57%
251.5Cel −9.04%
249.4Cel −10.33%
DTA uV
Temperature (°C)
Time (min)

Fig. 3

**INTERNATIONAL SEARCH REPORT**

International application No. PCT/JP2014/060068

A. CLASSIFICATION OF SUBJECT MATTER
*C09K21/12*(2006.01)i, *C08K5/521*(2006.01)i, *C08L101/00*(2006.01)i

According to International Patent Classification (IPC) or to both national classification and IPC

B. FIELDS SEARCHED

Minimum documentation searched (classification system followed by classification symbols)
C09K21/12, C08K5/521, C08L101/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 5-1079 A (Daihachi Chemical Industry Co., Ltd.), 08 January 1993 (08.01.1993), claims 1 to 4; paragraph [0034]; examples 1 to 10; table 2 & EP 509506 A2 | 1-9 |
| X | CN 101899064 A (JIANGSU YOKE TECHNOLOGY CO.), 01 December 2010 (01.12.2010), claims 1 to 12; paragraphs [0002] to [0004], [0029] to [0043]; table 1; examples 1 to 4 (Family: none) | 1-9 |
| X | JP 2012-57023 A (Daicel Polymer Ltd.), 22 March 2012 (22.03.2012), claims 1 to 4; examples 1 to 12 (Family: none) | 1-9 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>19 June, 2014 (19.06.14) | Date of mailing of the international search report<br>01 July, 2014 (01.07.14) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2014/060068

C (Continuation). DOCUMENTS CONSIDERED TO BE RELEVANT

| Category* | Citation of document, with indication, where appropriate, of the relevant passages | Relevant to claim No. |
|---|---|---|
| X | JP 2001-302682 A (Daihachi Chemical Industry Co., Ltd.), 31 October 2001 (31.10.2001), claims 1 to 8; paragraphs [0001], [0043], [0069]; examples (Family: none) | 1-9 |
| X<br>A | WO 2010/082426 A1 (Daihachi Chemical Industry Co., Ltd.), 22 July 2010 (22.07.2010), comparative examples 1, 5, 8, 11 & US 2011/0263767 A1 & EP 2380948 A1 & CN 102282236 A & TW 201030131 A | 1,2,6-9<br>3-5 |
| A | JP 2010-6965 A (Toray Industries, Inc.), 14 January 2010 (14.01.2010), claims 1 to 9; examples 1 to 22 (Family: none) | 1-9 |
| A | US 5420327 A (AKZO NOBEL N.V.), 30 May 1995 (30.05.1995), claims 1 to 6; examples 1, 2 (Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5001079 A
- JP 9087290 A
- WO 2010082426 A
- WO 2012005109 A
- JP HEI519931079 A
- JP HEI9199787290 A